# FASCICULE DE BREVET EUROPEEN

(11) **EP 2 671 063 B1**
(45) Date de publication et mention de la délivrance du brevet: **21.01.2015**
(21) Numéro de dépôt: 11796745.5
(22) Date de dépôt: 15.11.2011
(51) Int. Cl.: G01N 15/10, G01N 21/47, G01N 21/64, G01N 15/14, G01N 21/51

(54) **DISPOSITIF ET PROCEDE DE MESURES MULTIPARAMETRIQUES DE MICROPARTICULES DANS UN FLUIDE**
VORRICHTUNG UND VERFAHREN FÜR MULTIPARAMETERMESSUNGEN VON MIKROPARTIKELN IN EINER FLÜSSIGKEIT
DEVICE AND METHOD FOR MULTIPARAMETRIC MEASUREMENTS OF MICROPARTICLES IN A FLUID

(30) Priorité: 04.02.2011 FR 1150930
(43) Date de publication de la demande: 11.12.2013
(73) Titulaire: Horiba ABX SAS, 34184 Montpellier cedex 4 (FR)
(72) Inventeur: MERCHEZ, Benoît, F-34980 Combaillaux (FR); CREMIEN, Didier, F-34990 Juvignac (FR); URANKAR, Alexandra, F-34980 Saint Clement De Riviere (FR)
(74) Mandataire: Domange, Maxime
(86) Numéro de dépôt international: PCT/FR2011/052643
(87) Numéro de publication internationale: WO 2012/104496

(56) Documents cités:
- EP-A1- 0 564 157
- WO-A1-2010/004173
- WO-A2-2007/101932
- US-A- 5 934 885

## Description

### Arrière-plan de l'invention

La présente invention se rapporte au domaine général des dispositifs électro-optiques de mesures en flux pour la caractérisation de microparticules, notamment de cellules biologiques, comprenant une chambre de mesure dans laquelle circule le flux du fluide à caractériser et contenant les cellules à caractériser. Ce domaine s'appuie sur l'utilisation de méthodes d'analyse fondées sur l'utilisation de mesures électriques et optiques pour compter et différencier les cellules présentes dans un échantillon à analyser. La présente invention se rapporte plus spécifiquement à un dispositif électro-optique multiparamétriques pour le comptage et la caractérisation cellulaire.

Le fluide à caractériser est préférentiellement un échantillon sanguin, mais il peut être également un liquide biologique d'une autre nature du type liquide cérébrospinal, moelle osseuse etc. L'échantillon peut également contenir des particules de toute nature qu'il sera nécessaire de différencier et de compter.

Plus précisément, l'invention concerne les dispositifs comprenant au moins deux sources lumineuses, un dispositif de mesure de résistivité et plusieurs détecteurs permettant la mesure d'un paramètre optique, typiquement une mesure d'extinction et une mesure de diffractions aux grands angles.

Ces mesures permettent la caractérisation des cellules biologiques présentes dans le fluide.

Dans le cas des cellules hématopoïétiques, l'homme de l'art sait que l'analyse morphologique de la cellule, obtenue par volumétrie ou diffractométrie, incluant les phénomènes d'extinction ou d'absorption, permet la discrimination des principales lignées cellulaires incluant les érythrocytes ou globules rouges, les thrombocytes ou plaquettes et les leucocytes ou globules blancs. Cette dernière population est elle-même subdivisée en plusieurs catégories telles que, par exemple, les lymphocytes, les monocytes, les neutrophiles, les éosinophiles et les basophiles.

On peut, dans une certaine mesure, apprécier le niveau de maturité de ces cellules en déterminant simultanément leur volume et leur absorption apparente en lumière blanche tel que décrit dans le brevet US 5,138,181 déposé par la Demanderesse. Un dispositif développé dans un mode de réalisation en lumière quasi monochromatique est par exemple décrit dans le brevet WO 2006/053960. WO 2007101932 divulgue un dispositif électro-optique de caractérisation en flux de microparticules comprenant une chambre de mesure, au moins deux sources lumineuses de spectres disjoints ou non disjoints, un dispositif de mesure de résistivité et au moins trois détecteurs optiques. Les systèmes optiques sont positionnés pour que leurs axes fassent entre eux un angle non nul et distinct de 180°C autour de la chambre de mesure.

Cette appréciation de la maturité cellulaire est très importante car elle permet de réaliser des diagnostics précoces. De façon générale, et en absence de pathologies, seules les cellules matures sont présentes en majorité dans le sang circulant.

Pour chacun des types cellulaires cités plus haut, on connaît les différents niveaux de maturation. Ainsi, les globules rouges, encore appelés érythrocytes, ou hématies, sont d'abord fabriqués sous forme de proérythroblastes, puis d'érythroblastes basophiles, puis encore d'érythroblastes polychromatophiles, qui évoluent en érythroblastes acidophiles, puis en réticulocytes. Ce sont ces réticulocytes qui, enfin, se différencient en érythrocytes, une fois passé dans le sang circulant.

Les globules blancs ou leucocytes sont issus de la moelle osseuse sous la forme préalable de myéloblastes. Ces myéloblastes donneront ensuite les pro-granulocytes qui se transformeront alors en granulocytes basophiles, éosinophiles ou neutrophiles, d'abord non segmentés puis dont les noyaux vont de plus en plus se segmenter au fur et à mesure de leur maturation.

Ces mêmes myéloblastes sont également à l'origine de la lignée monocytaire qui donnera les monoblastes, les promonocytes puis les monocytes qui passeront dans le sang périphérique.

La cellule souche pluripotente dont est originaire le myéloblaste, donne également naissance à la lignée lymphocytaire par une différenciation sous forme de cellule souche lymphoïde dont une partie de sa lignée, lignée des lymphocytes T, ira continuer sa maturation dans le thymus et les ganglions et l'autre partie restera dans la moelle osseuse afin de donner la lignée des lymphocytes B. Ces lymphocytes B, une fois activés sous la forme de plasmocytes, produisent les anticorps pour combattre les antigènes pathogènes.

Les plaquettes sanguines, ou thrombocytes, proviennent, quant à elles, des mégacaryoblastes, eux-mêmes issus du progéniteur myéloïde dont est originaire le myéloblaste, qui, une fois arrivé au stade ultime de leur maturation, que sont mégacaryocytes thrombocytogènes, produisent des plaquettes par délitement de leurs cytoplasmes. Les plaquettes jeunes, plaquettes réticulées, contiennent une charge en ARN qui est le reliquat de leur cellule d'origine.

Le diagnostic de certaines pathologies nécessite la numération et la caractérisation de plus en plus fine des cellules hématopoïétiques dans le sang circulant. En particulier, il devient nécessaire de pouvoir mettre en évidence des populations spécifiques telles que les réticulocytes et les érythroblastes qui sont les versions immatures des érythrocytes. De même, la mise en évidence de cellules immatures, précurseurs des leucocytes, appelés lymphocytes, monocytes ou granulocytes immatures revêt une grande importance. La classification et le comptage des lymphocytes activés ou encore des plaquettes réticulées permettrait également d'améliorer véritablement le diagnostic des patients.

### Objet et résumé de l'invention

La présente invention a donc pour but principal de développer un dispositif d'analyse et un procédé associé permettant une meilleure différenciation et donc un meilleur comptage de chacune des populations particulaires contenues dans un échantillon en proposant un dispositif électro-optique de mesures en flux pour la caractérisation de microparticules comprenant une chambre de mesure dans laquelle circule le flux du fluide à caractériser, au moins deux sources lumineuses de spectres disjoints, un dispositif de mesure de résistivité et au moins trois autres détecteurs permettant chacun la mesure d'un paramètre optique, les paramètres optiques étant choisis parmi la fluorescence, l'extinction, la diffraction aux grands angles, la diffraction aux petits angles, le dispositif électro-optique étant tel que :
- la première source lumineuse, la moins cohérente, présentant la longueur d'onde la plus élevée, définit un axe optique principal perpendiculaire au flux de particules, l'axe optique principal supportant deux ensembles optiques, situés de part et d'autre de la cuve, l'un dit canon d' « émission » permettant la mise en forme du faisceau issu de ladite première source et l'autre dit canon de « réception » permettant la collection du signal issu de ladite première source lumineuse et situé après la cuve de mesure ;
- la seconde source lumineuse, la plus cohérente, présentant la longueur d'onde la plus faible, définit un axe optique secondaire croisant l'axe optique principal et perpendiculaire au flux de particules,
- un premier détecteur est placé en face de la première source à l'extrémité du canon de réception opérant ainsi en champ clair,
- le canon de réception comprend une optique de collection du faisceau provenant de l'interaction entre la première source lumineuse et les particules dans le flux vers le premier détecteur, cette optique de collection étant telle que sur une portion de son trajet, le faisceau lumineux transmis est un faisceau substantiellement collimaté,
- un premier miroir dichroïque est placé dans le canon de réception au niveau de la portion de trajet où le faisceau lumineux est substantiellement collimaté, pour réfléchir partiellement le faisceau lumineux issu de l'interaction entre la seconde source lumineuse et les particules dans le flux, vers un second détecteur placé sur le trajet du faisceau partiellement réfléchi,
- le canon d'émission comprend une optique de mise en forme du faisceau émis par la première source lumineuse, cette optique de mise en forme étant telle que sur une portion de son trajet, le faisceau lumineux est substantiellement un faisceau collimaté,
- un second miroir dichroïque est placé dans le canon d'émission entre la première source lumineuse et la cuve, au niveau de la portion de trajet où le faisceau lumineux est substantiellement collimaté, pour réfléchir partiellement le faisceau issu de l'interaction entre la seconde source lumineuse et les particules dans le flux, vers un troisième détecteur placé sur le trajet du faisceau partiellement réfléchi.

Ainsi, le dispositif comporte classiquement un micro-orifice au travers duquel passent les particules, donnant ainsi une première mesure de résistivité. Puis, grâce à deux sources lumineuses, dont l'une est de faible cohérence temporelle, le dispositif permet d'obtenir au moins trois autres mesures grâce à au moins trois voies de mesure supplémentaires.

Le dispositif selon l'invention comprend une voie de mesure supplémentaire grâce à l'introduction dans le canon d'émission d'un système de miroir(s) dichroïque(s) permettant l'obtention de mesure(s) supplémentaire(s). Cette innovation permet de rendre le dispositif modulaire et apte à prendre de multiples mesures dans un espace limité et avec des appareillages en petit nombre. En outre les paramètres mesurés peuvent, au besoin, être modifiés en conservant les mêmes éléments structurels. Les résultats de classification de particules obtenus sont bien supérieurs à ceux obtenus avec les dispositifs connus. En effet, la multiplicité et la modularité des paramètres accessibles rendent le dispositif selon l'invention particulièrement performant, sensible et polyvalent en termes de résultats de classification.

Le dispositif de l'invention est très simple à mettre en oeuvre, peu cher et permet d'obtenir de nombreuses mesures, donc de nombreuses caractéristiques cellulaires.

Le dispositif selon l'invention en autorisant un nombre élargi de mesures de paramètres permet la caractérisation, la différenciation et le comptage absolu des cellules contenues dans un échantillon biologique, dont le sang.

De plus, les sources lumineuses étant séparées, elles peuvent facilement être conjuguées ou non. Cette caractéristique permet notamment de s'affranchir de problèmes de compensation éventuels lors de mesures avec des fluorochromes.

Sans modifier drastiquement le montage optique décrit, on peut facilement obtenir des mesures supplémentaires. Par exemple, on peut obtenir des mesures de diffraction aux petits angles, des mesures de fluorescences, au moins autant que de sources cohérentes utilisées, qui peuvent apporter des informations supplémentaires sur la nature des particules étudiées.

Le dispositif selon l'invention est modulable en ce qu'il permet d'obtenir de nombreux paramètres qui peuvent être de nature très différente. En effet, on peut obtenir par exemple, une mesure en extinction, une mesure de diffraction aux grands angles et une mesure de fluorescence. Cette combinaison de mesures permet par exemple d'obtenir facilement et rapidement, une très bonne caractérisation des particules circulant dans la chambre de mesure.

En adaptant les mesures mises en oeuvre, l'invention permet de mesurer très précisément le contenu intracellulaire en hémoglobine de chaque population érythrocytaire. Par extension, le dispositif et le procédé selon l'invention peuvent permettre une meilleure analyse des populations leucocytaires de l'échantillon.

Selon une caractéristique particulière, un détecteur de diffraction/diffusion est placé en face de la seconde source lumineuse de l'autre coté de la cuve de mesure.

Cette caractéristique peut être utile pour participer à la classification des cellules dans certains cas particuliers ou encore, de manière plus générale, pour déclencher les mesures optiques.

Selon une caractéristique avantageuse de l'invention, le premier détecteur présente un gain commutable le rendant apte à réaliser deux types de mesure, une en extinction et une autre choisie parmi les diffractions et les fluorescences.

Cette caractéristique autorise d'utiliser un seul détecteur pour deux mesures de paramètres qui mettent en jeu des intensités lumineuses très différentes, typiquement une mesure d'extinction et une mesure de fluorescence. Cette caractéristique permet donc d'ajouter une mesure dans le canon d'émission. Le dispositif selon l'invention est alors encore davantage modulable car le premier détecteur peut être utilisé soit pour une mesure d'extinction, soit pour une mesure d'un autre paramètre optique. La présence de cette double mesure dans la même bande spectrale permet d'ajouter des paramètres pour la classification des cellules sans nécessité de changement matériel au sein du banc de mesures dès lors qu'une fluorescence dans cette bande spectrale existe et peut avantageusement être utilisée dans la classification des cellules. Cela évite de devoir installer des voies bien distinctes pour les mesures de fluorescence. Selon une application particulière, le premier détecteur réalise une mesure d'extinction, le second détecteur réalise une mesure de diffraction aux grands angles et le troisième détecteur réalise une mesure de fluorescence.

Les mesures ainsi obtenues permettent le comptage et la différentiation de 8 populations de cellules nucléées ou encore un immunophénotypage en fonction des échantillons analysés et de l'analyse des résultats effectuée à la suite de la prise de mesures.

Dans une autre application particulière de l'invention, le premier détecteur réalise une mesure d'extinction, le second détecteur réalise une mesure de fluorescence et le troisième détecteur réalise une mesure de fluorescence.

Les mesures ainsi obtenues permettent la détection de certaines particularités, par exemple mises en évidence par des fluorochromes, ou encore un immunophénotypage en fonction des échantillons analysés et de l'analyse des résultats effectuée à la suite de la prise de mesures.

Selon une caractéristique préférentielle, les deux miroirs dichroïques ont des propriétés optiques identiques générant la réflexion totale des longueurs d'ondes supérieures à la longueur d'onde de la seconde source et inférieures aux longueurs d'ondes de la première source.

Cette caractéristique permet de modifier au vouloir les mesures associées à chaque détecteur sans devoir modifier la structure physique du dispositif selon l'invention.

Selon une caractéristique particulière de l'invention, au moins un autre miroir dichroïque est ajouté dans le canon d'émission et/ou le canon de réception.

L'introduction d'un second miroir dichroïque présentant des caractéristiques adaptées dans au moins un des canons permet d'ajouter une autre mesure à 90° de l'axe optique principal. Le principe de l'invention peut ainsi être complété par l'introduction de plusieurs miroirs dichroïques dans chacun des canons de réception et/ou d'émission. La multiplicité des mesures peut encore être donc augmentée et la classification des particules est alors encore plus précise et pouvant comporter davantage de classes.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 montre un dispositif selon l'invention ;
- la figure 2 montre une classification cellulaire, obtenue avec un dispositif selon l'invention, dans le cas d'un sang ne présentant pas de pathologie obtenue avec les paramètres de résistivité RES et d'extinction EXT ;
- la figure 3 montre une classification cellulaire, obtenue avec un dispositif selon l'invention, dans le cas d'un sang contenant des érythroblastes obtenue avec les paramètres de résistivité RES, d'extinction EXT et de fluorescence FL1=TO ;
- la figure 4 montre une classification cellulaire, obtenue avec un dispositif selon l'invention, dans le cas d'un sang contenant des basophiles obtenue avec les paramètres de résistivité RES, d'extinction EXT, de fluorescence FL1=TO et de diffraction aux grands angles SSC;
- la figure 5 montre une classification cellulaire, obtenue avec un dispositif selon l'invention, dans le cas d'un sang contenant possédant des immatures granuleux obtenue avec les paramètres de résistivité RES, d'extinction EXT, de fluorescence FL1=TO et de diffraction aux grands angles SSC ;
- la figure 6 montre une classification cellulaire, obtenue avec un dispositif selon l'invention, dans le cas d'un sang contenant possédant des cellules immatures obtenue avec les paramètres de résistivité RES, d'extinction EXT et de fluorescence FL1=TO ;
- la figure 7 montre une classification cellulaire, obtenue avec un dispositif selon l'invention, dans le cas d'une leucémie lymphoïde obtenue avec les paramètres de résistivité RES, d'extinction EXT, de fluorescence FL1=TO et de diffraction aux grands angles SSC ;
- Les figures 8a et 8b montrent les matrices communes obtenues avec un dispositif selon l'invention et avec un dispositif de l'art antérieur avec les paramètres de résistivité RES, d'extinction EXT, de fluorescence FL1=TO, dans les cas d'un sang myélodysplasique ; La figure 8c montre une matrice obtenue uniquement avec un dispositif selon l'invention utilisant le nouveau paramètre de mesure de la diffraction aux grands angles SSC ;
- La figure 9 illustre un sang dont l'indice de réfringence des neutrophiles est très faible, cette illustration étant obtenue grâce à la mesure d'extinction EXT ;
- La figure 10 illustre un sang dont les neutrophiles possèdent deux indices de réfringences distincts distingués sur la base de la mesure d'extinction EXT ;
- La figure 11 illustre le cas d'un sang ayant des neutrophiles hyposegmentés sur la base de la mesure de diffraction aux grands angles SSC ;
- La figure 12 illustre la caractérisation lymphoblastique des cellules immatures d'un sang sur la base de la mesure de diffraction aux grands angles SSC.

### Description détaillée d'un mode de réalisation

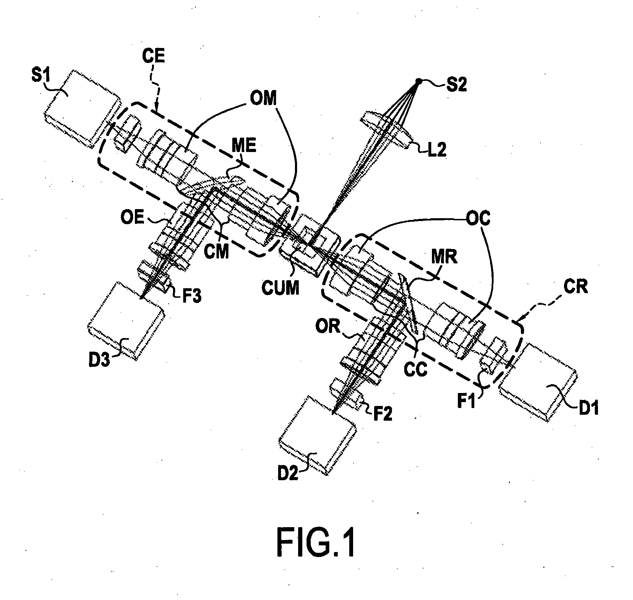

La figure 1 montre schématiquement les principes structurels et fonctionnels d'un dispositif selon l'invention. Le dispositif optique comprend une buse de focalisation non visible, au moins deux sources de lumière S1 et S2 conjuguées ou non dans la cuve de mesure aptes à émettre dans des zones spectrales différentes.

L'une des deux sources lumineuses S1 est de faible cohérence temporelle, de longueur de cohérence Lc < 100 µm, à une longueur d'onde centrale de 650nm. Elle définit un premier axe optique.

La deuxième source de lumière S2, ici située à 90° de l'axe optique de la source S1, est constituée par une ou plusieurs sources monochromatiques telle que typiquement utilisée pour la détection optique tri-paramétriques de fluorescences, notées FL1, FL2 et/ou d'une détection aux grands angles, notée SSC, selon l'une des configurations choisies décrites dans la suite. La source de lumière S2 est avantageusement constituée avec une diode laser de longueur d'onde 488 nm permettant de générer des phénomènes de fluorescence sur des cellules marquées au Thiazole Orange.

Une cuve de mesure CUM est placée à l'intersection des axes optiques des deux sources lumineuses S1 et S2.

Dans une réalisation avantageuse, un capillaire dirige la suspension cellulaire dans une buse de focalisation constituée d'un micro-orifice. Un fluide secondaire, assure le centrage de la suspension cellulaire jusqu'à la traversée de l'orifice de mesure. Cet orifice est utilisé pour la mise en oeuvre de la mesure du volume par méthode électrique, typiquement une mesure de résistivité. Cet orifice est traversé par un courant constant. Lorsqu'une cellule traverse l'orifice, la résistivité du canal est modifiée et produit une variation de tension aux bornes du trou de comptage. Cette tension est proportionnelle au volume de la cellule. Ce procédé de mesure est connu sous la dénomination de « principe de coulter » et l'ensemble des dispositions électroniques pour sa mise en oeuvre n'est pas décrit dans ce brevet.

Ensuite, les cellules sont acheminées, dans une fenêtre optique d'analyse obtenue en projetant un réticule d'intensité lumineuse aussi uniforme que possible dans la cuve de mesure CUM. La lumière diffractée, réfléchie ou absorbée par la particule induit une perturbation de la propagation de la lumière qui est détectée par le dispositif selon l'invention.

Selon l'invention, l'axe optique de la source S1 supporte deux éléments optiques : un canon d'émission CE situé entre la source S1 et la cuve de mesure CUM et un canon de réception CR situé entre la cuve de mesure CUM et le détecteur D1.

La cuve de mesure peut être de section circulaire. Cela engendre cependant des corrections optiques conséquentes qui alourdissent le cout de fabrication d'un dispositif selon l'invention. Dans une réalisation avantageuse, la cuve de mesure est polygonale et présente au moins quatre faces dont au moins deux faces sont parallèles l'une à l'autre. Ces deux faces parallèles sont placées de manière à être perpendiculaires à l'axe optique de la source S1. Concernant l'axe optique de la seconde source S2, il sera perpendiculaire à une autre face de la cuve de mesure CUM.

La réalisation préférentielle selon laquelle l'axe de la seconde source S2 est perpendiculaire à l'axe de la première source S1 met avantageusement en oeuvre une cuve de mesure à quatre faces. Cela permet une réalisation très simple et peu couteuse du dispositif selon l'invention. En effet, dans ce cas, les corrections optiques à réaliser pour la traversée des parois de la cuve sont aisées et l'orientation des axes optiques est optimale.

Le canon d'émission CE comprend une optique de mise en forme OM. Cette optique OM image un réticule sur le flux échantillon issue de la buse et présent dans la cuve de mesure CUM. L'optique de mise en forme OM est telle que sur une portion de chemin, notée CM, le faisceau lumineux est collimaté.

Le canon de réception comprend une optique de collection OC pour collecter l'image du réticule vers un détecteur D1. Sauf si la connaissance de l'extinction n'est pas souhaitée, le détecteur D1 réalise une mesure d'extinction EXT. Selon l'invention, l'optique de collection OC est telle que sur une portion de chemin, notée CC, le faisceau lumineux est collimaté.

L'optique de mise en forme OM est telle que, au niveau de la cuve de mesure CUM, l'ouverture numérique du faisceau lumineux convergent est ON1= n*sin u, n étant l'indice optique de l'air (donc n=1) et u étant le demi angle d'ouverture au niveau de l'entrée de l'optique de mise en forme OM.

L'uniformité d'éclairage est traditionnellement obtenue par un montage de type Köhler. Dans son principe, l'éclairage de Köhler consiste à imager la source de lumière S1 dans l'optique de collection OC. Ceci permet, d'une part, d'avoir une image unique de la source S1 située dans la pupille de l'optique de collection OC et, d'autre part, d'uniformiser la répartition de la lumière dans l'image du réticule.

La source S1 est avantageusement une diode électroluminescente à cavité résonante. Ces diodes présentent l'avantage de présenter un spectre bien déterminé à des longueurs d'onde absorbées par les cellules que l'on veut caractériser. Ainsi pour les mesures d'extinction, une diode électroluminescente à cavité résonante présentant un pic spectral centré sur la longueur d'onde 650 nm et de bande passante de 40 nm est avantageusement utilisée. Cependant, il est connu qu'une telle diode émet dans le rouge mais présente une harmonique dans le vert. Il est donc nécessaire de placer un filtre passe bande dans le canon d'émission CE pour éviter que cette composante verte ne vienne polluer les autres mesures, par exemple de fluorescence, en générant un bruit de fond. Avantageusement, le canon de réception comprend le même filtre afin de ne prendre en compte que le signal d'extinction.

Le système d'illumination peut être basé sur l'utilisation d'une fibre optique conformée comme indiqué dans le brevet WO 2006/053960 de la Demanderesse.

De manière générale, le dimensionnement du banc optique est basé sur la taille d'une fenêtre optique voulue ainsi que sur l'ouverture du faisceau dans la cellule de comptage ou cuve de mesure. L'image du réticule est typiquement de forme rectangulaire et ses dimensions sont fixées par deux contraintes. La plus grande dimension est fixée par la taille du fluide de gainage, ce diamètre étant sensiblement celui de l'orifice servant à la mesure volumétrique. Elle est donc fixée autour de 100 µm. La plus petite dimension détermine la résolution spatiale de la mesure, qui est la capacité à discriminer deux cellules très proches. Idéalement, cette dimension doit être la plus petite possible. La particule biologique traversant la fenêtre lumineuse à la vitesse v, la plus petite dimension de la fenêtre définit la durée d'exposition de la cellule au flux lumineux et donc la durée de l'impulsion électrique correspondant aux phénomènes physiques d'extinction et de diffraction dans l'axe. Pratiquement cette dimension est de l'ordre de 30 µm. On notera au passage que le facteur d'aspect de la fenêtre d'analyse est alors de l'ordre de 3. Il est à noter que l'ouverture numérique du faisceau de l'optique de réception est égale à celle du faisceau d'éclairage. On a alors ON2 = ON1.

Avantageusement, lorsque le dispositif fonctionne en régime d'extinction EXT avec le détecteur D1, le faisceau d'illumination d'ouverture angulaire comprise entre 1° et 60° est choisi en fonction de l'intervalle de volume, de l'intervalle d'indice de réfraction, et de la composition intra-cytoplasmique des particules étudiées. Il présente la longueur d'onde centrale choisie. Il présente aussi une uniformité d'éclairage meilleure que 10% dans un volume de mesure parallélépipédique axbxc où axb est la section rectangulaire du faisceau dont le facteur d'aspect a/b est inférieur à 4 et c est la profondeur de champ définie comme l'intervalle géométrique autour du point de mesure pour lequel la puissance ne varie pas plus de 10%. La valeur de cette intervalle est située typiquement autour de 500 µm +/- 250 µm.

Concernant la seconde source lumineuse S2, le positionnement de son axe de manière telle que cet axe optique croise celui de la première source S1 est particulièrement avantageux. En effet, l'axe optique de la source de lumière la moins cohérente S1, émettant aux longueurs d'ondes centrées autour de 650nm et servant typiquement pour faire une mesure d'extinction, est aligné avec celui d'un détecteur de lumière D1, typiquement une photodiode. En même temps, l'axe optique de la source de lumière S2 d'excitation de la fluorescence et/ou de diffraction est perpendiculaire aux axes optiques du détecteur D1 et de l'autre source de lumière S1. On note ici qu'un simple croisement des axes optiques avec un angle distinct de 90° permet d'obtenir aussi les avantages décrits.

Cette caractéristique permet en outre un bon comportement du détecteur D1 pour l'extinction, la fluorescence et la diffraction s'il est nécessaire d'utiliser le détecteur D1 pour la mesure d'un de ces paramètres. En effet, lorsque le détecteur D1 fonctionne en régime d'extinction, pour lequel le détecteur D1 mesure un paramètre d'extinction EXT, on assure que le détecteur D1 est bien situé face à la source de lumière. La détection se fait ainsi sur fond clair. Avantageusement, un filtre F1 permet de filtrer spectralement les longueurs d'onde issues de la source S1.

Lorsque le détecteur D1 est utilisé pour une mesure de fluorescence, en plaçant la source la plus cohérente S2, typiquement un laser, pour induire la fluorescence du ou des marqueurs ou colorants présents sur ou dans la cellule au moment du passage de la cellule sur le chemin optique perpendiculaire au détecteur D1, l'architecture selon l'invention permet que la mesure se fasse sur fond noir. Cela est en effet nécessaire lorsque la détection de la fluorescence se fait obligatoirement dans la bande de fréquences de l'extinction. Dans ce cas, la détection de la FL2 se fait obligatoirement dans la bande de fréquences de l'extinction et la source S1 doit être obligatoirement éteinte. Le positionnement à 90° présente cependant l'avantage de symétriser le dispositif selon l'invention. De plus, cela permet une mise en oeuvre grandement facilitée. On note ici que, dans ce cas, le détecteur D1 comprend avantageusement un gain variable commutable lui permettant de mesurer des intensités lumineuses très différentes comme indiqué dans le brevet FR 2 933 192 de la Demanderesse.

Selon l'invention, le dispositif inclut deux miroirs dichroïques MR et ME judicieusement choisis en fonction des paramètres que l'on souhaite mesurer. Le premier miroir dichroïque MR est inséré dans le canon de réception CR au niveau où le faisceau lumineux est collimaté. Le second miroir dichroïque ME est inséré dans le canon d'émission CE et, de manière originale, exploite le principe de retour inverse de la lumière.

Dans la réalisation préférentielle de l'invention, les deux miroirs MR et ME sont identiques. Ils provoquent la réflexion totale des longueurs d'ondes supérieures ou égales à la plus petite des longueurs d'ondes de la ou des sources situées à 90° et inférieures aux longueurs d'ondes de la première source S1. Les coûts de fabrication du dispositif selon l'invention sont ainsi limités. Dans l'exemple présenté, ces miroirs MR et ME laissent donc passer à 98% la composante rouge issue de la première source S1 et réfléchissent la composante bleue et verte de la fluorescence FL1.

Les miroirs MR et ME permettront avantageusement de séparer les composantes diffractives aux grands angles, notée SSC, et/ou de fluorescence issues de l'interaction entre la lumière émise par la source S2 et la cellule observée. Ainsi, ce montage optique permet notamment de séparer facilement des populations de cellules, par exemple les 8 populations de cellules nucléées dans un échantillon de sang total, car il permet de disposer d'une diversité jusqu'ici inconnue de mesures de paramètres dans un unique dispositif.

Selon l'invention, le montage optique est plus simple que les dispositifs de l'art antérieur. En effet, l'exploitation du principe de retour inverse de la lumière permet d'ajouter une mesure de diffraction aux grands angles ou de fluorescence sans modifier la structure générale du dispositif en ajoutant seulement des miroirs dichroïques.

Pour réaliser ces mesures, la source S2 est activée. La lumière issue de la source S2 est focalisée à l'aide d'une lentille convergente L2 dans le plan perpendiculaire au plan de mesure de l'extinction. L'image obtenue au point de mesure est une ellipse qui mesure environ 100µm x 30µm pour les mêmes raisons que celles citées précédemment. Du fait que la source S2 est une diode laser et donc présente un faisceau elliptique, préalablement choisie avec un rapport de 1/3, en sortie, on n'est pas dans l'obligation d'insérer un système optique généralement assez coûteux pour mettre en forme le faisceau bien connu de l'homme de l'art.

La lumière issue de l'interaction entre la lumière émise par la source S2 et la cellule emprunte le trajet inverse dans le canon d'émission. La composante diffractive est séparée de la composante d'extinction par le miroir dichroïque ME placé dans le canon d'émission. La lumière issue de fluorescence est séparée de la composante d'extinction par le miroir dichroïque MR placé dans le canon de réception.

La lumière diffractée aux grands angles SSC est collectée par l'optique de mise en forme OM du canon d'émission CE selon le principe de retour inverse de la lumière. Le miroir dichroïque ME, inséré dans l'optique de mise en forme OM, permet de réfléchir cette composante à 90° de l'axe d'extinction vers un détecteur D3.

La fluorescence étant isotropique, c'est-à-dire que celle-ci émet des rayons lumineux uniformément dans toutes les directions de l'espace, un filtre passe bande, noté F3, centré sur la longueur d'onde de la source S2 permet de supprimer la composante de fluorescence de la mesure de diffraction aux grands angles SSC effectuée par le détecteur D3. Le filtre F3 est avantageusement un filtre passe bande centré sur 488 nm avec un blocage de 10⁻⁶ sur la composante de fluorescence. L'association de l'optique de mise en forme OM, du filtre F3 et du détecteur D3 permet une mesure de la diffraction aux grands angles notée SSC. Avantageusement, une optique complémentaire, notée OE, est placée à la suite du miroir dichroïque ME entre celui-ci et le détecteur D3. Cette optique OE permet de focaliser le faisceau de diffraction provenant du miroir dichroïque ME sur le détecteur D3.

La fluorescence FL1 est collectée par l'optique de collection OC du canon de réception CR. Le miroir dichroïque MR, inséré au sein de l'optique de collection OC, permet de réfléchir cette composante à 90° de l'axe optique de la source S1 vers un détecteur D2. Pour séparer la composante diffractive, un filtre passe bande F2, centré sur le pic de fluorescence attendue de FL1 est inséré sur le chemin optique situé entre le miroir dichroïque MR et le détecteur D2. Le filtre F2 est avantageusement un filtre passe bande centré sur 530 nm associé à un filtre NOTCH double qui supprime, avec un blocage 10⁻⁸, la composante de diffraction qui est en moyenne 1000 fois supérieure à la composante de fluorescence pour un marquage au Thiazole Orange et la composante rouge issue de la première source S1. L'association de l'optique de collection OC, du filtre F2 et du détecteur D2 permet une mesure de fluorescence, notée FL1. Avantageusement, une optique complémentaire, notée OR, est placée à la suite du miroir dichroïque MR entre celui-ci et le détecteur D2. Cette optique OR permet de focaliser le faisceau de fluorescence provenant du miroir dichroïque MR sur le détecteur D2.

La configuration du montage selon l'invention est telle que la fluorescence FL1 et la diffraction aux grands angles SSC sont collectées par une partie de l'optique également destinée à la mesure d'extinction EXT. Cette approche permet d'aboutir à un niveau d'intégration optimal caractéristique de l'invention. Une réduction des coûts de réalisation et une facilité de mise en oeuvre sont donc des avantages importants de cette invention.

Avec un tel dispositif, chaque cellule est mesurée en quadri-paramétrique, à savoir une mesure de résistivité, une mesure d'extinction, une mesure de fluorescence et une mesure de diffraction aux grands angles.

Le dispositif selon l'invention comprend ainsi une optique OC associée à un filtre F1 qui filtre en longueur d'onde l'image du réticule, une optique OE ainsi qu'un filtre passe bande F3, centré sur la longueur d'onde de la source S2 collectant la diffraction aux grands angles SSC issue de l'interaction entre la lumière issue de la source S2 et la cellule observée, une optique OR ainsi qu'un filtre passe bande F2, centré sur le Pic de la fluorescence, collectant celle-ci issue de l'interaction entre la lumière émise par la source S2 et la cellule et deux miroirs dichroïques MR et ME permettant de séparer les composantes diffractive et d'extinction d'une part et les composantes de fluorescence et d'extinction d'autre part et enfin trois détecteurs D1, D2 et D3 qui sont trois photodiodes ou préférentiellement, respectivement, deux photodiodes et une photodiode à effet avalanche à gain variable.

Classiquement, les lumières de fluorescence et de diffraction sont séparées sur la base de leurs propriétés spectrales. Pour ce faire, on utilise généralement des filtres optiques interférentiels F1, F2, F3 du type multidiélectriques, c'est-à-dire des filtres obtenus par le dépôt alterné de deux ou plusieurs matériaux transparents ayant des indices de réfraction distincts. Ce sont avantageusement des filtres à bombardage ionique ce qui leur confère un très bon blocage hors bande et une très bonne transmission. Ces filtres F1, F2, F3 sont installés sur les chemins lumineux entre la cuve de mesure CUM et les détecteurs D1, D2, D3 en fonction des mesures désirées. Des filtres divers peuvent être utilisés en fonction des longueurs d'ondes de fluorescences attendues et des longueurs d'onde d'illuminations utilisées.

Le dispositif selon l'invention peut ainsi être modulé en choisissant d'extraire les paramètres les plus pertinents pour l'application visée : comptage et différenciation des leucocytes, immunophénotypage ou détection de certaines caractéristiques particulières des populations cellulaires présentes dans l'échantillon etc. En effet, l'extinction fait intervenir dans une large mesure les phénomènes de réfringence/diffraction cellulaire. Dans le cas d'utilisation de Thiazole orange, la fluorescence caractérise le contenu en ARN de chaque cellule. Enfin la diffraction aux grands angles SSC reflète la lobularité des cellules. Cet ensemble de mesures permet d'obtenir suffisamment de données fiables pour obtenir des résultats sensibles et spécifiques sur l'ensemble des populations cellulaires étudiées.

Les modulations peuvent être par exemple :
- Résistivité RES, Extinction EXT, Side scatter SSC, et une Fluorescence FL1 pour le comptage et la différentiation de 8 populations de cellules nucléées.
- Résistivité RES, Extinction EXT, deux Fluorescences, FL1 et FL2, pour la détection de certaines particularités par exemple mises en évidence par des fluorochromes.
- Résistivité RES, Extinction EXT ou une Fluorescence FL2, Side scatter SSC et une Fluorescence FL1 pour une application en immunophénotypage.

Quand la mesure aux grands angles SSC est remplacée par une seconde fluorescence FL2, le filtre passe bande centré sur la longueur de la source S2 est remplacé par le même type de filtre centré sur le pic d'émission de la fluorescence FL2. Il est à noter que les faisceaux issus de S1 et de S2 doivent alors être conjugués au point de mesure. Ce n'est que dans ce cas qu'il sera judicieux de décaler temporellement les mesures des fluorescences FL1 et FL2 issues de deux sources monochromatiques utilisées pour les mesures de fluorescences S2 et S3, cette dernière source S3 étant placée au même endroit que la source S2. La mesure de la seconde fluorescence pourra être effectuée sur le détecteur D3 placé du coté du canon d'émission CE ou être réalisée avec le détecteur D1 servant également pour la mesure d'extinction. Dans ce cas, le détecteur D1 présente un gain commutable afin de pouvoir mesurer des intensités d'ordres de grandeur très différents.

La deuxième fluorescence sera avantageusement une fluorescence sur un marqueur leucocytaire du type CD45. Ce marqueur a la caractéristique de provoquer une fluorescence vers 665 nm qui correspond à la bande passante de la diode constituant la première source S1. Cette fluorescence permet d'éviter d'avoir à changer les filtres sur le chemin optique vers le détecteur D1. En effet, pour accéder à la mesure de fluorescence sur le détecteur D1, la seule obligation est de devoir éteindre la première source S1 lors d'un marquage au CD45. La mesure de cette seconde fluorescence est alors réalisée avec le détecteur D1 basculé en mode avalanche.

Dans une autre configuration, le filtre passe bande F3 peut être remplacé par le même type de filtre centré celui-ci sur le pic de fluorescence FL2. Dans ce cas, l'ajout d'une seconde source monochromatique, située elle aussi à 90° de l'axe de la source S1 permet la mesure de la seconde fluorescence. Il est à noter que, dans ce cas précis, il est préférable que les mesures de fluorescences soient décalées temporellement afin d'éviter le phénomène de compensation connue de l'homme de l'art.

Un cinquième paramètre mesurant la diffraction aux petits angles FSC (« Forward Scatter » en anglais) pourra être ajouté dans certaines applications en plaçant un détecteur dans l'axe du laser. On remarque que ce détecteur pourra être utilisé comme un déclencheur des mesures optiques. La mesure de résistivité est alors avantageusement associée afin d'obtenir une information volumétrique, en plus du comptage absolu. Ces paramètres permettent également de caractériser les plaquettes qui sont les plus petits éléments du sang en utilisant le même dispositif.

Le dispositif décrit dans ce qui précède est utilisé pour l'identification et la caractérisation des érythroblastes ainsi que de sept populations leucocytaires que sont les lymphocytes, les monocytes, les neutrophiles, les éosinophiles, les basophiles, les immatures granuleux et les cellules immatures.

Ce dispositif analyseur de liquide biologique est relié à des moyens de réception pour recevoir les données mesurées correspondant à n=4 paramètres physiques : hauteur résistive RES, hauteur SSC, hauteur extinction EXT et hauteur FL1. Avantageusement, le paramètre de fluorescence FL1=TO pour Thiazole Orange correspond à une fluorescence après marquage au Thiazole Orange. Dans sa version de base, le réactif « Fluowhite » (brevet FR 2 821 428) réalisé par la société Horiba Médical permet une lyse totale des globules rouges en préservant et marquant au Thiazole Orange l'ensemble des cellules nucléées contenues dans le sang total. Ces n paramètres définissent un événement.

On effectue ensuite la classification de chaque événement selon une des huit populations cellulaires présentées ci-dessus. Les moyens de visualisations sont des matrices, c'est-à-dire des espaces orthogonaux utilisant chacun deux paramètres de mesures.

Les quatre matrices usuelles permettant cette visualisation sont en général : RESxEXT, SSCxFL1, EXTxFL1 et EXTxSSC.

Selon le dispositif de l'invention, dans le cas d'un sang ne présentant pas de pathologie, les mesures RES et EXT sont suffisantes pour identifier complètement les populations lymphocytes L, monocytes M, neutrophiles N et éosinophiles E.

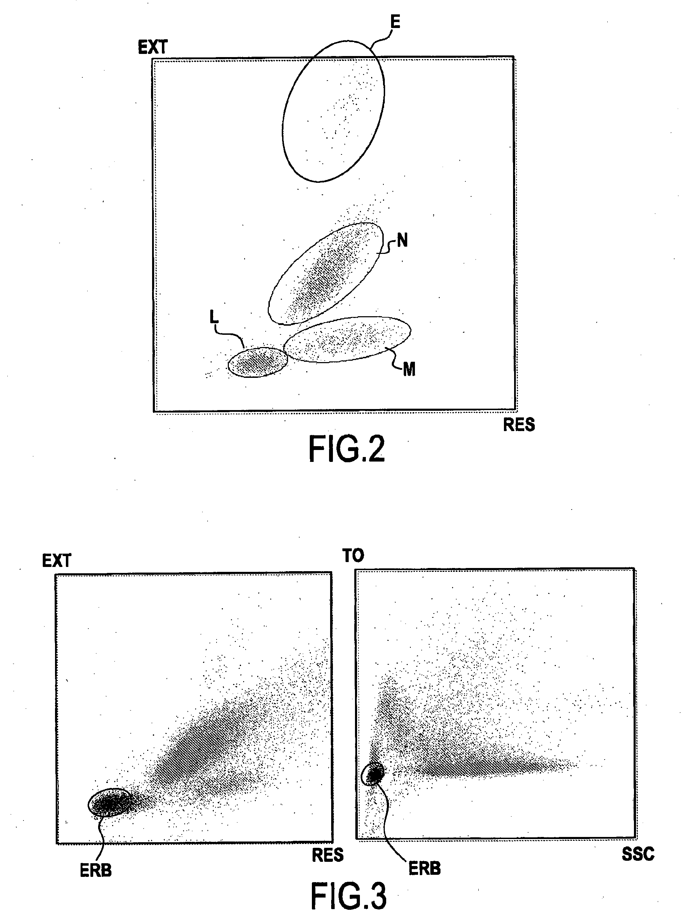

La figure 2 montre une telle classification cellulaire dans le cas d'un sang ne présentant pas de pathologie.

Cependant ces mesures ne permettent pas de résoudre l'identification des basophiles, des érythroblastes, des immatures granuleux et des cellules immatures. Ces populations étant souvent révélateur d'une pathologie, il est important de pouvoir les identifier et les compter le plus précisément possible.

Le dispositif selon l'invention permet une identification précise des érythroblastes grâce à la mesure en fluorescence FL1 permise par l'invention. Les érythroblastes peuvent posséder la même hauteur résistive, la même hauteur en extinction et la même hauteur en SSC que les lymphocytes. Cependant, après avoir incubé l'échantillon avec du Thiazole Orange spécifique des acides nucléiques, les érythroblastes ont une réponse en fluorescence plus faible que les lymphocytes. Ainsi la mesure de la fluorescence FL1 est nécessaire pour identifier correctement les érythroblastes. La figure 3 illustre cet avantage dans le cas d'un sang contenant des érythroblastes représentés par des points noirs entourés ERB sur cette figure. On note ici et pour la suite que certains seulement des points visibles dans les zones entourés représentent les populations identifiées, il s'agit des seuls points noirs. Des zones entourées sont utilisées pour des raisons graphiques.

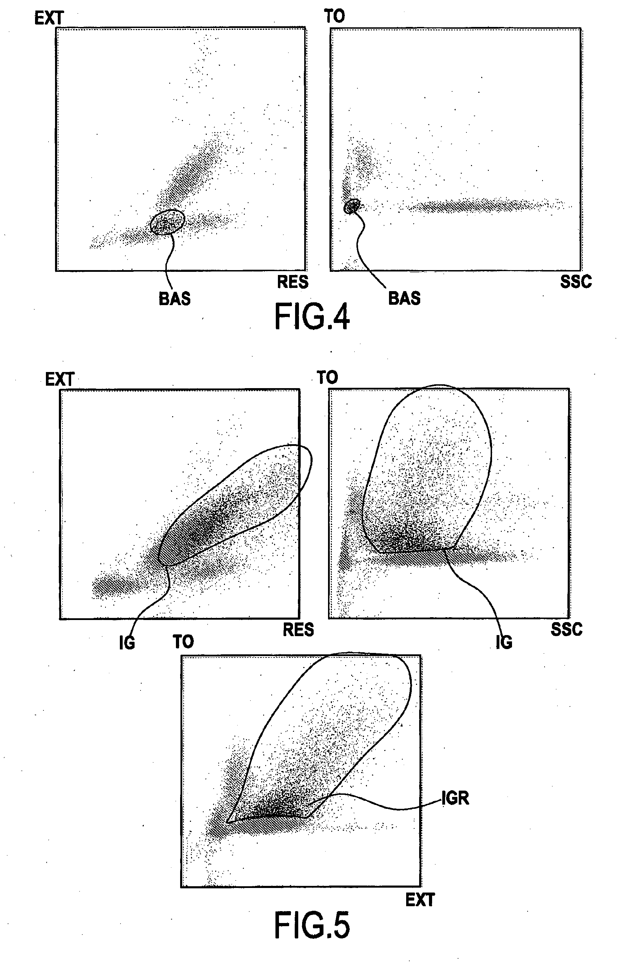

Toujours après avoir incubé l'échantillon avec du Thiazole Orange, le dispositif permet une identification précise des basophiles grâce à la mesure en fluorescence FL1 et la mesure de diffraction aux grands angles SSC. Les basophiles ont une position très diffuse dans la matrice RESxEXT et sont facilement confondus avec les lymphocytes, monocytes et neutrophiles. Aussi, en cas de présence de basophiles, l'identification de ces populations avec les seules mesures en RES et EXT est impossible. En revanche, les basophiles sont facilement identifiables sur la matrice SSCxFL1 comme l'illustre la figure 4. Les basophiles sont représentés par des points noirs entourés BAS sur cette figure.

Le dispositif permet une identification précise des immatures granulocytaires grâce à la matrice EXTxFL1. La mesure en fluorescence FL1, toujours grâce au Thiazole Orange, permet de déterminer la maturité des granuleux, neutrophiles ou immatures granuleux. Les immatures granuleux peuvent posséder les mêmes hauteurs résistives, SSC et FL1 que des monocytes. Ainsi, pour pouvoir les identifier parfaitement, les mesures en extinction EXT et de fluorescence FL1 sont nécessaires. La matrice SSCxFL1 est moins discriminante, cependant elle est utilisée en cas d'hypogranulation des neutrophiles et des immatures granuleux.

La figure 5 illustre cet avantage dans le cas d'un sang possédant des immatures granuleux qui sont représentés par des points noirs entourés IG sur cette figure.

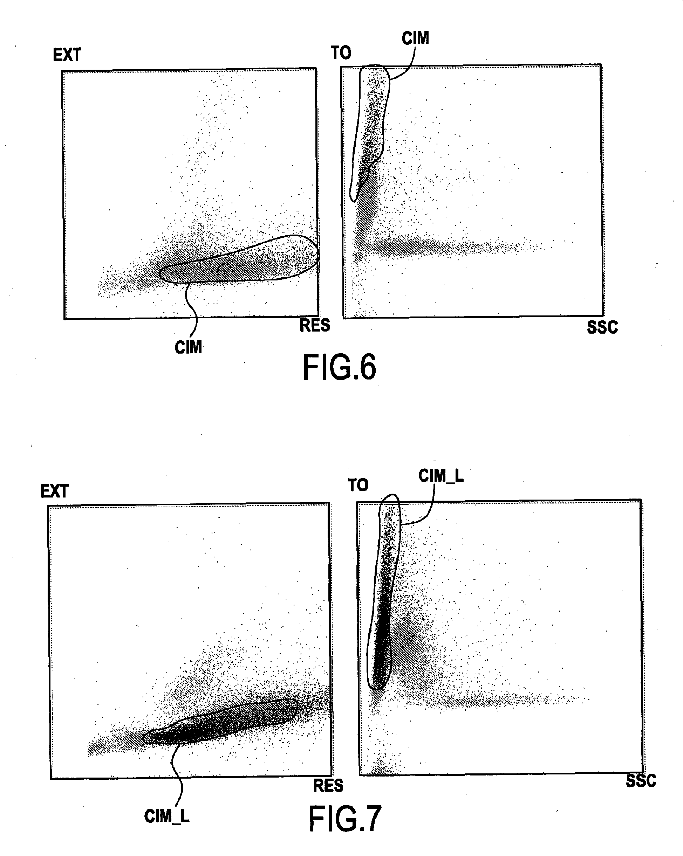

Le dispositif selon l'invention permet une identification précise des cellules immatures grâce à la mesure en fluorescence, toujours avec du Thiazole Orange. En effet, les cellules immatures possédant davantage d'ARN que les cellules matures, leur réponse en fluorescence est plus importante. La figure 6 illustre cet avantage. On voit que les cellules immatures représentées par des points noirs comptant parmi les particules entourées CIM sur cette figure sont plus différenciées sur le diagramme (SSC,TO) que sur le diagramme (ABS,RES). L'ensemble des deux figures permet cependant une bonne différenciation.

Le dispositif permet encore une identification précise des cellules immatures dans le cas de pathologie lymphoïde grâce à la mesure en SSC. Les lymphoblastes possèdent les mêmes hauteurs résistives, extinction et FL1 que des monocytes. Ainsi, pour pouvoir les identifier parfaitement, la mesure complémentaire en SSC est nécessaire. La figure 7 illustre cet avantage dans le cas d'une leucémie lymphoïde. Les lymphoblastes sont ici représentés par des points noirs entourés CIM-L.

Le dispositif permet donc avantageusement d'identifier les sept populations leucocytaires ainsi que les érythroblastes dans le cas de sangs normaux et le cas de sangs pathologiques. Par ailleurs, il démontre également sa supériorité dans le cas de pathologies fréquemment rencontrées sur les cellules matures.

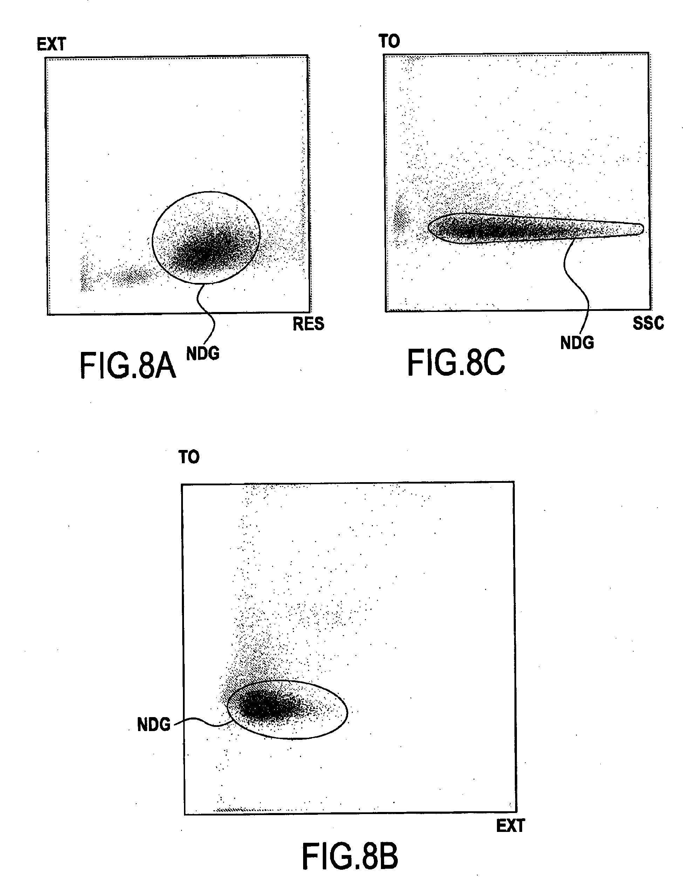

Les figures 8a et 8b montrent les matrices communes obtenues à l'aide du dispositif selon l'invention et avec un dispositif de l'art antérieur avec les paramètres de résistivité RES, d'extinction EXT, de fluorescence FL1=TO, dans les cas d'un sang myélodysplasique. Sur ces matrices, il est impossible d'identifier les neutrophiles dégranulés NDG qui sont confondus avec les monocytes et les lymphocytes. La figure 8c, au contraire, montre une matrice obtenue uniquement avec un dispositif selon l'invention utilisant le nouveau paramètre de mesure de la diffraction aux grands angles SSC qui permet d'identifier les neutrophiles dégranulés NDG.

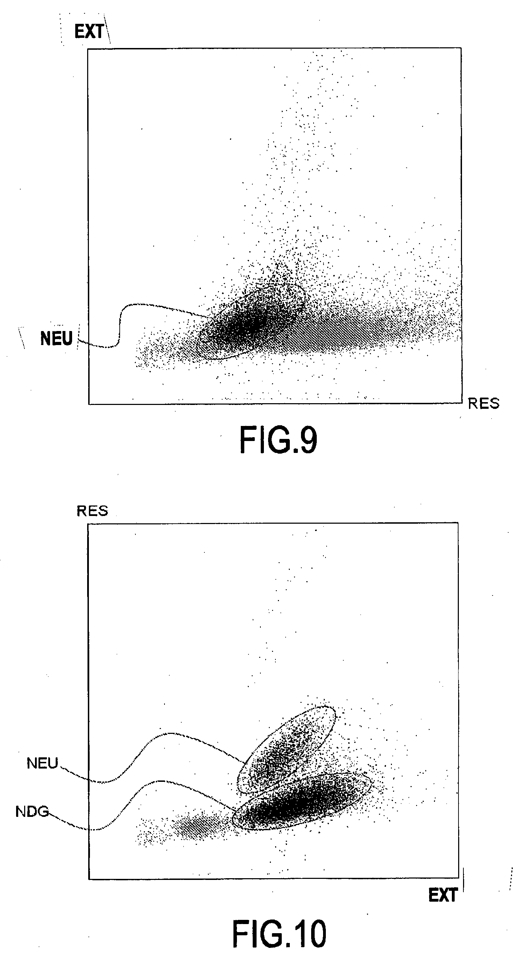

Le dispositif selon l'invention permet encore une caractérisation de la granulation des neutrophiles grâce à la mesure en extinction EXT. En effet, la présence de granulations augmente la hauteur en extinction EXT, c'est pourquoi les neutrophiles et éosinophiles ont une extinction EXT supérieure aux lymphocytes et monocytes qui ne possèdent pas de granulation. Il est ainsi possible de définir un indice de granulation. Celui-ci est calculé comme la moyenne des indices de réfringence des neutrophiles. La figure 9 illustre un sang dont l'indice de réfringence des neutrophiles représentés par des points noirs entourés NEU est très faible.

Le dispositif selon l'invention permet également « d'alarmer » un sang qui posséderait une population de neutrophiles normaux et une population de neutrophiles dégranulés. Cela se traduit par la présence de neutrophiles présentant deux indices de réfringences distincts. Cela peut être détecté par l'utilisation de la mesure en extinction EXT. La figure 10 illustre un sang dont les neutrophiles représentés par des points noirs entourés NEU et NDG possèdent deux indices de réfringences distincts.

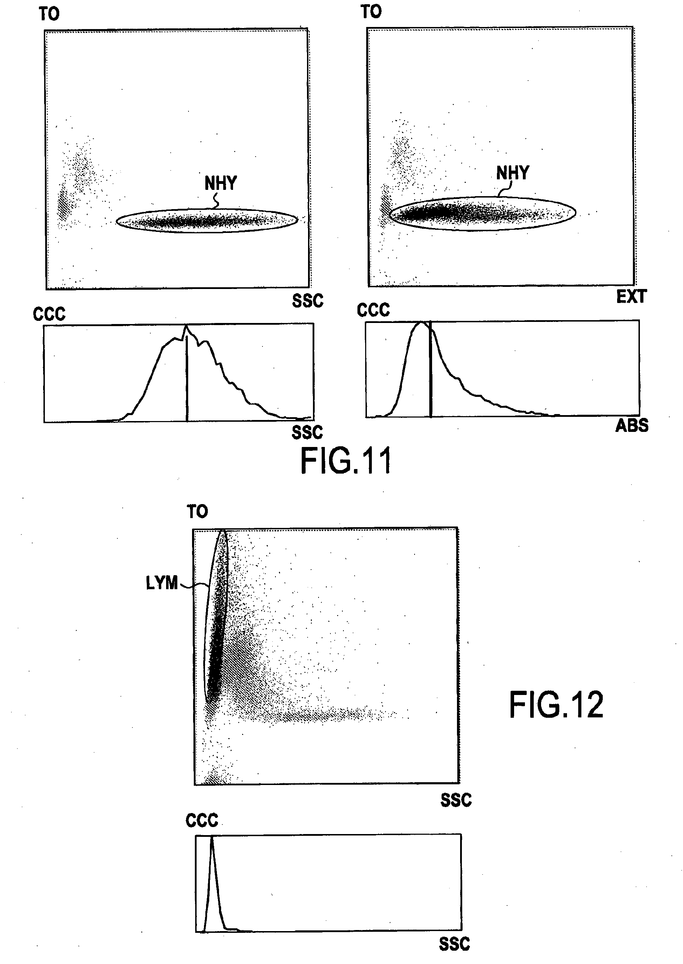

Le dispositif selon l'invention permet une caractérisation de la lobularité des neutrophiles grâce à la mesure en SSC. La mesure SSC est très sensible à la structure interne de la cellule et reflète donc la forme du noyau. Ainsi plus le noyau possède de lobes, plus la hauteur en SSC va être grande et inversement. Il est ainsi possible de définir un indice de lobularité comme la moyenne des hauteurs en SSC des neutrophiles. La figure 11 illustre le cas d'un sang ayant des neutrophiles hyposegmentés qui sont représentées par des points noirs entourés NHY.

Le dispositif selon l'invention permet une caractérisation du type de cellules immatures grâce à l'utilisation du SSC. Plus la moyenne en SSC des cellules immatures est petite, plus il y a de chances pour qu'il s'agisse de lymphoblastes. La moyenne en SSC des lymphoblastes se situe autour de 245, celle ces monocytes autour de 644 et celle des HRC (High RNA Content ou cellules riches en ARN) autour de 322. La figure 12 illustre la caractérisation lymphoblastique des cellules immatures d'un sang. Les lymphoblastes sont représentés par des points noirs entourés LYM.

Il est à noter que ce dispositif pourra permettre également de mettre en évidence des globules rouges de formes et de tailles différentes. On pourra ainsi mettre en évidence, par exemple des globules rouges avec des inclusions, des hématies falciformes etc. Pour cela, le dispositif selon l'invention comprend deux mesures de fluorescences ayant lieu pour des longueurs d'onde d'illumination distinctes. Des filtres particuliers seront alors utilisés.

L'intérêt de l'immunophénotypage par cytométrie en flux (CMF) en biologie clinique touche à de nombreux domaines notamment :
- La description des populations normales dans le sang, la moelle et les différents organes,
- L'analyse des antigènes de différenciation leucocytaire,
- L'étude de la naissance, de la vie, de la mort cellulaire,
- La description des mécanismes de signalisation cellulaire et de différentes fonctions cellulaires,
- L'exploration des rubriques de l'immunopathologie : diagnostic et surveillance des déficits immunitaires, diagnostic et suivi des maladies auto-immunes, immunologie des greffes et des transplantations, maladies lympho-prolifératives, hypersensibilités,
- La participation au diagnostic dans de nombreuses maladies hématologiques,
- Et dans le domaine de la cancérologie, évaluation des réactions de l'hôte contre la tumeur, et suivi de l'immunothérapie.

La possibilité d'identifier en cytométrie en flux des antigènes cellulaires et d'y associer l'étude des acides nucléiques, du cycle cellulaire et de la ploïdie a fait franchir un grand pas pour l'étude des mécanismes physiopathologiques de diverses maladies.

Dans le cas de l'application du dispositif de l'invention en immunophénotypage, la photodiode permettant la détection de l'extinction est remplacée par une photodiode à effet d'avalanche connectée à un circuit de polarisation apte à inhiber le gain interne d'avalanche. Cette implémentation permet de réduire le comportement de la photodiode à effet d'avalanche au comportement d'une photodiode classique de gain unitaire telle qu'utilisée classiquement pour les mesures d'extinction EXT. En l'absence de l'inhibition de gain, la photodiode à effet d'avalanche saturerait dès lors qu'elle serait utilisée pour une mesure d'extinction où l'intensité lumineuse est élevée. Ce procédé est décrit dans le brevet FR 2 933 192 de la Demanderesse.

On remarque enfin que diverses mises en oeuvre peuvent être réalisées selon les principes de l'invention. En particulier, d'autres miroirs dichroïques peuvent être installés en série dans le canon de réception et dans le canon d'émission du dispositif selon l'invention afin de dévier le faisceau lumineux provenant de la cuve de mesure vers des détecteurs qui prendraient d'autres mesures. Les miroirs dichroïques seront alors tous différents afin d'aiguiller les composantes du flux lumineux vers chacun des détecteurs. Cette réalisation qui multiplie encore le nombre de mesures accessibles présente cependant l'inconvénient d'être couteuse à mettre en oeuvre à cause de la diversité et de la précision des miroirs devant être utilisés. On note aussi que l'utilisation d'une cuve de mesure présentant un nombre de faces plus élevés que dans l'exemple présenté, par exemple à 6 ou 8 faces permettrait de multiplier les mesures selon les principes de l'invention.

## Revendications

1. Dispositif électro-optique de mesures en flux pour la caractérisation de microparticules comprenant une chambre de mesure (CUM) dans laquelle circule le flux du fluide contenant les microparticules à caractériser, au moins deux sources lumineuses (S1,S2) de spectres disjoints, un dispositif de mesure de résistivité (RES) et au moins trois autres détecteurs (D1,D2,D3) permettant chacun la mesure d'un paramètre optique, les paramètres optiques étant choisis parmi la fluorescence (FL), l'extinction (EXT), la diffraction aux grands angles (SSC), la diffraction aux petits angles (FSC), le dispositif électro-optique étant tel que :
- la première source lumineuse (S1), la moins cohérente, présentant la longueur d'onde la plus élevée, définit un axe optique principal perpendiculaire au flux de particules, l'axe optique principal supportant deux ensembles optiques, situés de part et d'autre de la chambre de mesure, l'un étant un canon d'émission (CE) permettant la mise en forme du faisceau issu de ladite première source (S1) et l'autre étant un canon de réception (CR) permettant la collection du signal issu de ladite première source lumineuse (S1) et situé après la chambre de mesure (CUM) ;
- la seconde source lumineuse (S2), la plus cohérente, présentant la longueur d'onde la plus faible, définit un axe optique secondaire croisant l'axe optique principal et perpendiculaire au flux de particules,
- le premier détecteur (D1) est placé en face de la première source (S1) à l'extrémité du canon de réception (CR), le premier détecteur étant configuré pour opérer en champ clair,
- le canon de réception (CR) comprend une optique de collection (OC) du faisceau provenant de l'interaction entre la première source lumineuse (S1) et les particules dans le flux vers le premier détecteur (D1), cette optique de collection (OC) étant telle que sur une portion de son trajet (CC), le faisceau lumineux transmis est un faisceau substantiellement collimaté,
- le canon de réception (CR) comprend un premier miroir dichroïque (MR) au niveau de la portion de trajet (CC) où le faisceau lumineux est substantiellement collimaté, pour réfléchir partiellement le faisceau lumineux issu de l'interaction entre la seconde source lumineuse (S2) et les particules dans le flux, vers le second détecteur (D2) placé sur le trajet du faisceau partiellement réfléchi,
- le canon d'émission (CE) comprend une optique de mise en forme (OM) du faisceau émis par la première source lumineuse (S1), cette optique de mise en forme (OM) étant telle que sur une portion de son trajet (CM), le faisceau lumineux est substantiellement un faisceau collimaté,
- le canon d'émission (CE) comprend un second miroir dichroïque (ME) entre la première source lumineuse (S1) et la chambre de mesure (CUM), au niveau de la portion de trajet (CM) où le faisceau lumineux est substantiellement collimaté, pour réfléchir partiellement le faisceau issu de l'interaction entre la seconde source lumineuse (S2) et les particules dans le flux, vers le troisième détecteur (D3) placé sur le trajet du faisceau partiellement réfléchi.

2. Dispositif selon la revendication 1, comprenant un détecteur de diffraction/diffusion placé en face de la seconde source lumineuse (S2) de l'autre coté de la chambre de mesure (CUM).

3. Dispositif selon l'une des revendications précédentes, **caractérisé en ce que** le premier détecteur (D1) présente un gain commutable le rendant apte à réaliser deux types de mesure, une en extinction (EXT) et une autre choisie parmi les diffractions (SSC,FSC) et les fluorescences (FL).

4. Dispositif selon l'une des revendications précédentes, **caractérisé en ce que** le premier détecteur (D1) est configuré pour réaliser une mesure d'extinction (EXT), le second détecteur (D2) est configuré pour réaliser une mesure de diffraction aux grands angles (SSC) et le troisième détecteur (D3) est configuré pour réaliser une mesure de fluorescence (FL1).

5. Dispositif selon l'une des revendications 1 à 3, **caractérisé en ce que** le premier détecteur (D1) est configuré pour réaliser une mesure d'extinction (EXT), le second détecteur (D2) est configuré pour réaliser une mesure de fluorescence (FL2) et le troisième détecteur (D3) est configuré pour réaliser une mesure de fluorescence (FL1).

6. Dispositif selon l'une des revendications précédentes, **caractérisé en ce que** les deux miroirs dichroïques (MR,ME) ont des propriétés optiques identiques générant la réflexion totale des longueurs d'ondes supérieures à la longueur d'onde de la seconde source (S2) et inférieures aux longueurs d'ondes de la première source (S1).

7. Dispositif selon l'une des revendications précédentes, **caractérisé en ce que** le canon d'émission (CE) et/ou le canon de réception (CR) comprends au moins un autre miroir dichroïque

## Patentansprüche

1. Elektrooptische Vorrichtung für Strommessungen für die Kennzeichnung von Mikropartikeln, die eine Messkammer (CUM), in der der Fluidstrom, der die zu kennzeichnenden Mikropartikel enthält, zirkuliert, wenigstens zwei Lichtquellen (S1, S2) mit voneinander verschiedenen Spektren, eine Widerstandsmessvorrichtung (RES) und wenigstens drei andere Detektoren (D1, D2, D3), die jeweils die Messung eines optischen Parameters ermöglichen, umfasst, wobei die optischen Parameter aus der Fluoreszenz (FL), der Extinktion (EXT), der Beugung mit großen Winkeln (SSC) und der Beugung mit kleinen Winkeln (FSC) gewählt sind, wobei die elektrooptische Vorrichtung so beschaffen ist, dass:
- die erste Lichtquelle (S1), die am wenigsten kohärent ist und die größte Wellenlänge aufweist, eine optische Hauptachse senkrecht zum Strom der Partikel definiert, wobei die optische Hauptachse zwei optische Anordnungen trägt, die sich beiderseits der Messkammer befinden, wovon eine eine Sendekanone (CE) ist, die die Formung eines Strahlenbündels erlaubt, das von der ersten Quelle (S1) ausgegeben wird, und wovon die andere eine Empfangskanone (CR) ist, die das Sammeln des von der ersten Lichtquelle (S1) ausgegebenen Signals erlaubt und sich hinter der Messkammer (CUM) befindet;
- die zweite Lichtquelle (S2), die am stärksten kohärent ist und die kleinste Wellenlänge aufweist, eine sekundäre optische Achse definiert, die die optische Hauptachse schneidet und zu dem Strom der Partikel senkrecht ist,
- der erste Detektor (D1) gegenüber der ersten Quelle (S1) am Ende der Empfangskanone (CR) angeordnet ist, wobei der erste Detektor konfiguriert ist, im Hellfeld zu arbeiten,
- die Empfangskanone (CR) eine Sammeloptik (OC) für das Strahlenbündel, das aus der Wechselwirkung zwischen der ersten Lichtquelle (S1) und den Partikeln in dem Strom zu dem ersten Detektor (D1) hervorgeht, umfasst, wobei diese Sammeloptik (OC) derart ist, dass auf einem Abschnitt (CC) ihrer Bahn das gesendete Lichtstrahlenbündel ein im Wesentlichen parallel gerichtetes Strahlenbündel ist,
- die Empfangskanone (CR) einen ersten dichroitischen Spiegel (MR) auf Höhe des Bahnabschnitts (CC), wo das Lichtstrahlenbündel im Wesentlichen parallel gerichtet ist, umfasst, um das Lichtstrahlenbündel, das aus der Wechselwirkung zwischen der zweiten Lichtquelle (S2) und den Partikeln in dem Strom hervorgeht, teilweise zu dem zweiten Detektor (D2) zu reflektieren, der in der Bahn des teilweise reflektierten Strahlenbündels angeordnet ist,
- die Sendekanone (CE) eine Formungsoptik (OM) für das von der ersten Lichtquelle (S1) ausgesendete Strahlenbündel umfasst, wobei die Formungsoptik (OM) derart ist, dass auf einem Abschnitt (CM) ihrer Bahn das Lichtstrahlenbündel im Wesentlichen ein parallel gerichtetes Strahlenbündel ist,
- die Sendekanone (CE) einen zweiten dichroitischen Spiegel (ME) zwischen der ersten Lichtquelle (S1) und der Messkammer (CUM) auf Höhe des Bahnabschnitts (CM), wo das Lichtstrahlenbündel im Wesentlichen parallel gerichtet ist, umfasst, um das Strahlenbündel, das aus der Wechselwirkung zwischen der zweiten Lichtquelle (S2) und den Partikeln in dem Strom hervorgeht, teilweise zu dem dritten Detektor (D3) zu reflektieren, der in der Bahn des teilweise reflektierten Strahlenbündel angeordnet ist.

2. Vorrichtung nach Anspruch 1, die einen Beugungs-/Diffusionsdetektor umfasst, der gegenüber der zweiten Lichtquelle (S2) auf der anderen Seite der Messkammer (CUM) angeordnet ist.

3. Vorrichtung nach einem der vorhergehenden Ansprüche, **dadurch gekennzeichnet, dass** der erste Detektor (D1) eine kommutierbare Verstärkung aufweist, die ihn geeignet macht, zwei Messtypen zu verwirklichen, eine mit Extinktion (EXT) und eine andere, die unter den Beugungen (SSC, FSC) und den Fluoreszenzen (FL) wird.

4. Vorrichtung nach einem der vorhergehenden Ansprüche, **dadurch gekennzeichnet, dass** der erste Detektor (D1) konfiguriert ist, eine Extinktionsmessung (EXT) zu verwirklichen, der zweite Detektor (D2) konfiguriert ist, eine Beugungsmessung mit großen Winkeln (SSC) zu verwirklichen und der dritte Detektor (D3) konfiguriert ist, eine Fluoreszenzmessung (FL1) zu verwirklichen.

5. Vorrichtung nach einem der Ansprüche 1 bis 3, **dadurch gekennzeichnet, dass** der erste Detektor (D1) konfiguriert ist, eine Extinktionsmessung (EXT) zu verwirklichen, der zweite Detektor (D2) konfiguriert ist, eine Fluoreszenzmessung (FL2) zu verwirklichen, und der dritte Detektor (D3) konfiguriert ist, eine Fluoreszenzmessung (FL1) zu verwirklichen.

6. Vorrichtung nach einem der vorhergehenden Ansprüche, **dadurch gekennzeichnet, dass** die zwei dichroitischen Spiegel (MR, ME) gleiche optische Eigenschaften haben, die die Totalreflexion der Wellenlängen größer als die Wellenlänge der zweiten Quelle (S2) und kleiner als die Wellenlängen der ersten Quelle (S1) bewirken.

7. Vorrichtung nach einem der vorhergehenden Ansprüche, **dadurch gekennzeichnet, dass** die Sendekanone (CE) und/oder die Empfangskanone (CR) wenigstens einen weiteren dichroitischen Spiegel umfassen.

## Claims

1. An electro-optical flow measuring device for the characterization of microparticles, comprising a measuring chamber (CUM) in which the flow of fluid containing the microparticles to be characterized circulates, at least two light sources (S1, S2) of disjoint spectra, a device for measuring resistivity (RES), and at least three other detectors (D1, D2, D3) each allowing the measurement of an optical parameter, the optical parameters being chosen from among fluorescence (FL), extinction (EXT), wide angle diffraction (SSC), and small angle diffraction (FSC), the electro-optical device being such that:
- the first light source (S1), the least coherent and having the longest wavelength, defines a main optical axis perpendicular to the flow of particles, the main optical axis having two optical assemblies positioned on either side of the measuring chamber, one being an emitting gun (CE) allowing the shaping of the beam emitted by the first source (S1), and the other being a receiving gun (CR) allowing the collection of the signal emitted by the first light source (S1) and being positioned after the measuring chamber (CUM);
- the second light source (S2), the most coherent and having the shortest wavelength, defines a secondary optical axis crossing the main optical axis and perpendicular to the flow of particles;
- the first detector (D1) is placed facing the first source (S1) at the extremity of the receiving gun (CR), the first detector being configured to have a light field operation;
- the receiving gun (CR) comprises collection optics (OC) collecting the beam issued from the interaction between the first light source (S1) and the particles in the flow towards the first detector (D1), these collection optics (OC) being such that over a portion of its pathway (CC), the transmitted light beam is substantially a collimated beam;
- the receiving gun (CR) comprises a first dichroic mirror (MR) at the portion of pathway (CC) where the light beam is substantially collimated, to partly reflect the light beam issued from the interaction between the second light source (S2) and the particles in the flow towards the second detector (D2) placed on the pathway of the partly reflected beam;
- the emitting gun (CE) comprises beam-shaping optics (OM) shaping the beam emitted by the first light source (S1), these beam-shaping optics (OM) being such that over a portion of its pathway (CM), the light beam is substantially a collimated beam; and
- the emitting gun (CE) comprises a second dichroic mirror (ME) between the first light source (S1) and the measuring chamber (CUM), at the portion of pathway (CM) where the light beam is substantially collimated, so that it partly reflects the beam issued from the interaction between the second light source (S2) and the particles in the flow, towards the third detector (D3) placed on the pathway of the partly reflected beam.

2. The device according to claim 1, comprising a diffraction/scatter detector placed facing the second light source (S2) on the other side of the measuring chamber (CUM).

3. The device according to either of the preceding claims, **characterized in that** the first detector (D1) has a switchable gain making it capable of performing two types of measurement, one being extinction (EXT) measurement and another chosen from among diffractions (SSC, FSC) and fluorescence (FL).

4. The device according to one of the preceding claims, **characterized in that** the first detector (D1) is configured to perform an extinction (EXT) measurement, the second detector (D2) is configured to perform a wide angle diffraction (SSC) measurement and the third detector (D3) is configured to perform a fluorescence (FL1) measurement.

5. The device according to one of claims 1 to 3, **characterized in that** the first detector (D1) is configured to perform an extinction (EXT) measurement, the second detector (D2) is configured to perform a fluorescence (FL2) measurement, and the third detector (D3) is configured to perform a fluorescence (FL1) measurement.

6. The device according to one of the preceding claims, **characterized in that** the two dichroic mirrors (MR, ME) have identical optical properties generating the total reflection of wavelengths longer than the wavelength of the second source (S2) and shorter than the wavelengths of the first source (S1).

7. The device according to one of the preceding claims, **characterized in that** the emitting gun (CE) and/or the receiving gun (CR) comprise(s) at least one other dichroic mirror.
